# EUROPEAN PATENT SPECIFICATION

(11) **EP 2 159 614 B1**
(45) Date of publication and mention of the grant of the patent: **08.08.2012**
(21) Application number: 09010649.3
(22) Date of filing: 19.08.2009
(51) Int. Cl.: G02B 6/44, G02B 6/255

(54) **Flame-retardant fiber optic assembly**
Flammhemmender Glasfaseranordnung
Assemblag ignifuge de fibres optiques

(30) Priority: 29.08.2008 US 231113
(43) Date of publication of application: 03.03.2010
(73) Proprietor: Corning Cable Systems LLC, Hickory, NC 28601 (US)
(72) Inventor: Cline, Timothy S., Granite Falls NC 28630 (US); Cody, Joseph T., Hickory NC 28602 (US); Coleman, Casey A., Hickory NC 28601 (US); Greveling, Johannes I., Newton NC 28658 (US); Luther, James P., Hickory NC 28602 (US)
(74) Representative: Sturm, Christoph

(56) References cited:
- EP-A- 1 022 596
- EP-A- 1 316 830
- GB-A- 2 184 512
- JP-A- 9 140 818
- US-A- 4 472 222
- US-A1- 2008 170 828
- US-B1- 6 400 874

## Description

### BACKGROUND

### Field

The disclosure is directed to flame-retardant fiber optic assemblies. More specifically, the disclosure is directed to fiber optic assemblies having transition locations that are flame-retardant for indoor or indoor/outdoor use.

### Technical Background

Fiber optic cables developed for indoor or indoor/outdoor use are required to meet stringent flame and/or smoke ratings, which are tested by independent laboratories. Typically, indoor or indoor/outdoor fiber optic cables are preconnectorized at respective ends with conventional fiber optic connectors and these assemblies meet the desired ratings for the space without modification. As optical fiber moves toward the subscriber and private networks become more advanced, there is a need for more robust and ruggedized fiber optic assemblies to interface with the emerging plug and play networks deployed for indoor and indoor/outdoor applications.

Meeting this emerging demand can be very challenging since the fiber optic assemblies must meet the flame and/or smoke ratings along with still meeting the desired mechanical and optical performance characteristics. One skilled in the art realizes that the flame and/or smoke ratings can be difficult to pass since they generally involve an open flame and require all combustion to cease shortly after removal of the flame. Conversion of outdoor products to nonflammable assemblies by material substitution can be difficult due to the mechanical and environmental requirements that the assemblies must pass. Still further even minor variations in material composition may result in unwanted side effects, and complete material substitutions may exacerbate these unwanted effects. Moreover, designing and testing of the fiber optic assemblies is expensive and time consuming. The fiber optic industry requires a simple, reliable, and effective way to make fiber optic assemblies suitable for indoor and indoor/outdoor applications without extensive redesign and testing of the same.

US-B1-6 400 874 is directed to a cable having a continuous length. US-B1-6 400 874 requires that a non-combustible support element and fireproofing layer are disposed radially inward of sheaths. The sheath defines the outer surface of the cable and all of the other structure is radially inward of sheath.

US-A-4 472 222 discloses a recoverable closure assembly for protecting cable splices. The recoverable closure assembly requires a support layer formed from a thermoplastic material and a polymeric heat barrier layer.

EP-A-1 022 596 discloses a heat shrink tubing for optical splices that includes an electrically conductive rod. The rod has an electrical resistance that is used to heat the shrink tubing and shrink the same about the splice.

### SUMMARY

The disclosure is directed to a fiber optic assemblie having a covering that is flame-retardant for use at a transition location or the like as recited in claim 1 and a method for forming such covering in such assembly as recited in claim 5. The covering has multiple components and provides the necessary characteristics to pass bum testing, thereby allowing indoor and/or indoor/outdoor use. The covering includes a heat dissipative structure and a heat resistant structure disposed about a transition location of the fiber optic assembly. Additionally, the covering includes a flame-retardant wrap configured for sealing and/or securing the covering such as a flame-retardant heat-shrink material. The heat dissipative structure is a metal foil, such as an aluminum foil and the heat resistant structure is made of mica. The covering can have many suitable constructions for application such as individual components applied sequentially or a composite structure such as a wrap or tube for application together. Thus, the fiber optic assemblies are easy to manufacture and reliable.

It is to be understood that both the foregoing general description and the following detailed description present embodiments, and are intended to provide an overview or framework for understanding the nature and character of the disclosure as it is claimed. The accompanying drawings are included to provide further understanding, and are incorporated into and constitute a part of this specification. The drawings illustrate the various example embodiments and, together with the description, serve to explain the principals and operations of the disclosure.

### BRIEF DESCRIPTION OF THE DRAWINGS

**FIG. 1** is a partial cutaway view of a fiber optic assembly according to one embodiment;

**FIG. 2** is a schematic view showing the completed splicing of a preconnectorized assembly with a fiber optic cable to form the fiber optic assembly of **FIG. 1****;**

**FIG. 3** is a schematic view showing a heat dissipative structure applied to portion of the fiber optic assembly of **FIG. 2****;**

**FIG. 4** is a schematic view showing a heat resistant structure applied to portion of the fiber optic assembly of **FIG. 3****;**

**FIG. 5** is a generic cross-sectional view of an explanatory fiber optic assembly; and

**FIG. 6** is another embodiment of a demarcation according to the disclosure.

### DETAILED DESCRIPTION

Detailed reference will now be made to the drawings in which examples of the disclosure are shown. The detailed description uses numerical and letter designations to refer to features of the drawings. Like or similar designations in the drawings and description have been used to refer to like or similar parts where possible.

The drawings and detailed description provide a full and written description of the examples, and of the manner and process of making and using these examples, so as to enable one skilled in the pertinent art to make and use them, as well as the best mode of carrying out the concepts disclosed. The examples set forth in the drawings and detailed description are provided by way of explanation only and are not meant as limitations. The disclosure thus includes any modifications and variations of the following examples as come within the scope of the appended claims and their equivalents.

The figures that are about to be described in detail show exemplary flame resistant coverings or structures for a transition location. These coverings generally include various layers and materials combined to provide flame or burn-through resistance more effectively than, for instance, a stand-alone, flame-resistant heat shrink employed over a spliced area of an enclosure. The components and materials of the composite flame resistant coverings are simple and economical to manufacture and use. Other advantages of the flame resistant coverings will be apparent from the following description and the attached drawings or can be learned through practice of the embodiments and their equivalents.

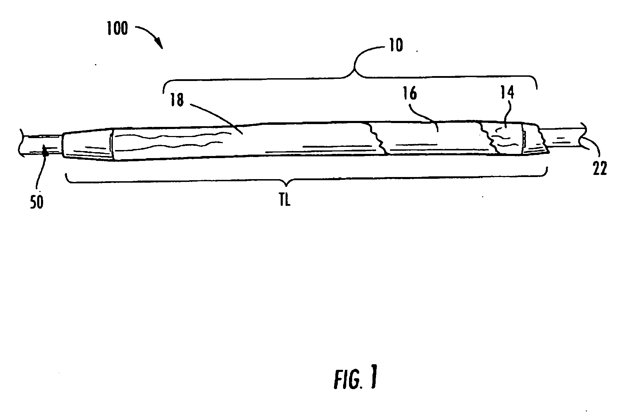

**FIG. 1** depicts a partial cutaway view of a fiber optic cable assembly **100** having a covering **10** disposed about a transition location **TL.** As used herein, transition location **TL** is a location on the fiber optic assembly where a portion of a cable jacket or other outer coating of the fiber optic assembly has been removed and requires protection thereover and/or a preconnectorized assembly is attached. For instance, **FIG. 1** depicts transition location **TL** between a preconnectorized assembly **50** and an end portion of fiber optic cable **22,** thereby making a plug and play assembly. Preconnectorized assembly **50** includes a pigtail (not numbered) with a hardened connector (not shown) suitable for outdoor use as known in the art. Examples of hardened connectors are Opti-Tap® and Opti-tip™ connectors available from Coming Cable Systems of Hickory, North Carolina, but other suitable hardened connectors and//or preconnectorized assemblies are possible. Further, fiber optic cable **22** may have any suitable design and/or construction. By way of example, both preconnectorized assembly **50** and fiber optic cable **22** have the desired flame-inhibiting characteristics; however, the structure used for closing/covering transition location **TL** is inherently flammable.

Covering **10** is advantageous since it provides the transition location **TL** with the suitable characteristics so that fiber optic assembly **100** passes flame-retardant ratings such as UL 746C or the like, thereby qualifying the assembly for indoor or indoor/outdoor applications. Examples of transition locations **TL** include demarcation locations such as where optical fibers are spliced together such as attaching one or more preconnectorized assemblies, tap locations where optical fibers are extracted from a distribution cable, where fiber optic cables are opened and/or optical fibers are secured to inhibit the migration of excess fiber length along the assembly, and the like. In this embodiment, covering **10** has a multi-layer construction. Covering **10** generally includes a heat dissipative structure **14** and a heat resistant structure **16.** Heat dissipative structure **14** is disposed about a portion of transition location **TL** and acts as a heat shield, whereas heat resistant structure **16** is disposed about a portion of heat dissipative structure 14. An optional flame-retardant wrap **18** such as a heat shrink tubing or wrap may be placed about a portion of the heat resistant structure **16.** As discussed below, covering **10** can be a composite structure or formed from individual components.

The combination of a high temperature capable substrate, such as mica, along with an underlying heat dissipative structure, such as metal foil, provides the needed burn-through resistance that a single layer of either material is incapable of providing. Covering **10** provides superior flame-resistance/performance. Additionally, covering **10** is suitable for use over structure that is inherently flammable, thereby providing the desired characteristics for the portion having the underlying flammable structure. Transition location **TL** includes an overmold portion that is inherently flammable, but after covering **10** is applied the transition location **TL** has the desired characteristics.

Heat dissipative structure **14** has a metallic content for effective transfer of the thermal energy. Heat dissipative structure **14** is formed from a metal foil such as aluminum. The thickness of heat dissipative structure **14** may depend on the material used, but one embodiment has a heat dissipative structure **14** with a thickness between about 0.02 millimeters and about 0.2 millimeters, but other thicknesses are possible. A material such as aluminum acts as a heat shield because of its thermal conduction properties that reduce localized heating.
A typical aluminum foil has a thickness greater than about 0.02 millimeters such as between about 0.025 millimeters and 0.075 millimeters. The skilled artisan will recognize that materials other than aluminum may be utilized for heat dissipative structure **14** depending on specific requirements and/or regulations. For instance, relatively thin steel, copper, stainless steel or other metallic tapes wrapped longitudinally or tangentially may be used.

Heat resistant structure **16** is disposed about a portion of heat dissipative structure **14**. Heat resistant structure **16** can withstand temperatures of up to about 1000 degrees C. Heat resistant structure **16** includes mica material such as a mica tape. A suitable heat resistant mica tape is available from Coebgi, Inc. of Dover NH. Of course, other suitable heat resistant structures are possible. For instance, heat resistant structure **16** may also include a polyurethane/polyphosphazene blends or aramid

The multiple components of covering **10** may have any suitable construction and/or method for applying the same about the transition location **TL.** For instance, covering **10** may be provided in separate layers such as a metal foil that is formable about a portion of transition location **TL** and a mica tape. Generally speaking, aluminum foil readily takes the desired set and seals about the transition location without much difficulty. However, the mica tape does not form like the aluminum foil so it may optionally include an adhesive layer or have other means such as applying an adhesive to the structure for forming and/or retaining about transition location **TL** if necessary. Adhesive layer can be applied to one of the components with any suitable method such as spray, brush, etc. However, it is noted that the adhesive, glue, or the like may be flammable and it should be used sparingly. In other embodiments, covering **10** is a composite structure so that the layers may be applied about the transition location **TL** together. Moreover, covering **10** may include a further outer layer for sealing and/or mechanical protection

As shown, flame-retardant wrap **18** generally surrounds the transition location **TL.** Flame-retardant wrap **18** may be manufactured from any suitable material such as flame retardant polyolefin, fluoropolymer (such as fluorinated ethylene propylene (FEP) or PTFE), PVC, neoprene, or silicone elastomer. Flame-retardant wrap **18** may also be a heat shrink material that includes polyolefin heat shrink or ATUM flame retardant heat shrink tubing such as available from Raychem of Menlo Park, California, or FEP heat shrinks or Teflon® heat shrink tubing from Zeus Industrial Products, Inc. of Orangeburg, South Carolina. Of course, suitable heat shrink materials are not limited to the foregoing sources and examples.

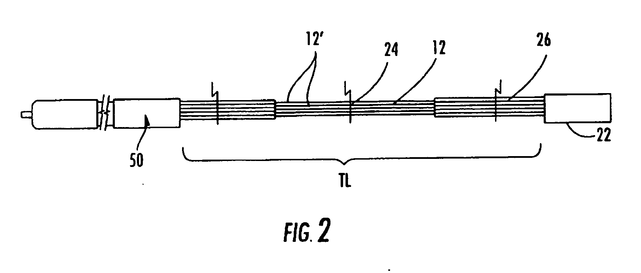

**FIGS. 2-4** depict an exemplary method of making fiber optic assembly **100.** **FIG. 2** schematically depicts preconnectorized assembly **50** having one or more optical fibers **12'** spliced to respective optical fibers **12** of fiber optic cable **22** at splice **24.** Once the operations of splicing, excess fiber management, providing a splice protector or protective tube, strain relief of strength members, sealing, overmolding, etc. are completed, the transition location **TL** must be closed and/or resealed while still meeting the necessary flame or smoke rating for the desired space. The concepts disclosed are advantageous since they allow a quick and easy method of reliably and ruggedly closing the transition location **TL** while still meeting the desired flame, smoke, mechanical, and optical ratings. For instance, fiber optic assembly **100** may be required to meet riser or plenum ratings for indoor applications or other suitable ratings for use in other applications.

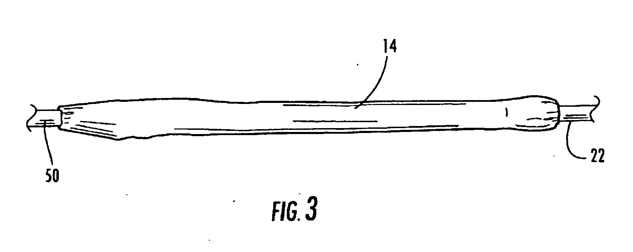

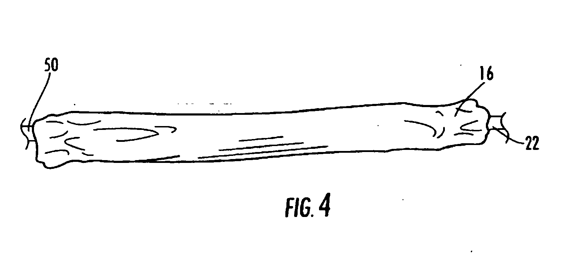

Although **FIG. 3** and **FIG. 4** depict heat dissipative structure **14** and heat resistant structure **16** applied as separate components they may have a composite structure (i.e., the structures are attached together and can be applied together as described above). Specifically, **FIG.** 3 is a schematic view showing a heat dissipative structure **14** about a portion of transition location **TL.** For instance, one or more pieces of metal foil such as aluminum are applied to portion of the transition location **TL.** Since the metal foil is thin it is relatively easy to plastically deform the same to shape and close the same about the transition location **TL.** Other methods could use a glue or adhesive to secure the same, but this is not necessary with a thin metal foil. Moreover, the use of glue or adhesive may burn or cause smoke, which is a generally undesired effect.

**FIG. 4** is schematic view showing heat resistant structure **16** applied to portion of transition location **TL** about a portion of heat dissipative structure **14.** Heat resistant structure **16** preferably can withstand relatively high temperatures such as up to about 1200 degrees C. By way of example, heat resistant structure **16** is applied over heat dissipative structure **14** so that it generally covers the same.

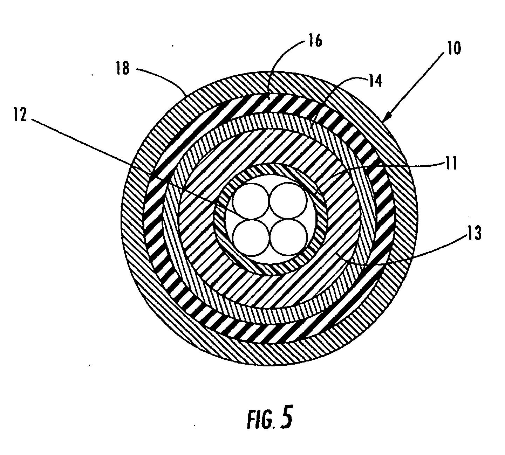

Turning now to **FIG. 5**, it depicts a generic cross-sectional view of a fiber optic assembly showing the structure of covering **10.** A typical structure within covering **10** is depicted for the purposes of illustration. As depicted, optical fibers **12** are disposed within a protective tube **11** that has an overmold **13** disposed thereabout, thereby forming a structure at the transition location **TL** that is inherently flammable. Thus, covering **10** is provided over this inherently flammable structure so that the fiber optic assembly has the desired characteristics for the intended space. Specifically, heat dissipative structure **14** and heat resistant structure **16** are disposed over the inherently flammable structure. Finally, heat shrink wrap **18** is applied for sealing and/or mechanical protection as depicted in **FIG. 1****,** thereby completing fiber optic assembly **100.**

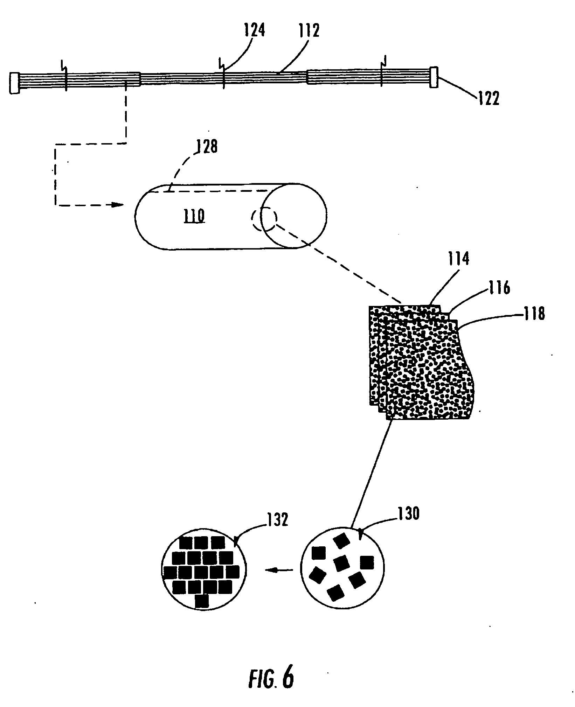

With reference now to **FIG. 6****,** another embodiment of a flame resistant covering **110.** Specifically, FIG. **6** shows a fiber optic cable **122** having optical fibers **112** spliced at a splice area **124** to another suitable fiber optic structure. A flame resistant structure **110,** which includes multiple layers of a heat dissipative structure **114,** a heat resistant structure **116** and a flame-retardant wrap **118,** is slipped onto, wrapped, or otherwise placed over the transition location **TL** to complete the fiber optic assembly as discussed above. In this example, covering **110** is shaped as a tube or a sleeve that may include a slit or opening **128** to position the covering **110** over the transition location **TL.** Alternatively, the covering **110** may be a wrap that may be wrapped onto transition location **TL.**

In any of its alternative forms, covering **110** provides necessary burn-through protection by using flame retardant particles or pieces **130** that may trapped between, for instance, the flame-retardant wrap **118** and the underlying structure of the fiber optic assembly. In this example, the pieces **130** are combinations of mica and aluminum schematically represented as square shapes but may present a honeycomb pattern or have a variety of other geometric forms, the size and distribution of which are such that upon heating, the particles **130** converge or are brought in close proximity to each other to produce a generally solid layer **132** as covering shrinks about the structure. In other embodiments, strips of metal foil having mica particles can be attached to an inner surface of a flame-retardant wrap or heat shrink tubing. Again, mica is suitable as a heat shield and the aluminum (or other suitable material) adds shielding and conduction to minimize localized heating. Other flame resistant and conductive materials may be used in addition to mica and aluminum.

It will be apparent to those skilled in the art that various modifications and variations can be made without departing from the scope of the appended claims. Thus, it is intended that the disclosure cover the modifications and variations of this invention, provided they come within the scope of the appended claims and their equivalents.

## Claims

1. A fiber optic assembly having a transition location (TL) the transition region (TL) being a location on the fiber optic assembly where a portion of a cable jacket or other outer coating of the fiber optic assembly has been removed and/or a preconnectorized assembly (50) is attached, with a covering (10,110), the transition region (TL) including an overmold portion (13) the covering (10, 110) comprising:
a heat dissipative structure (14, 114) being a metal foil disposed about a portion of the transition location (TL);
a heat resistant structure (16, 116) includes a mica disposed about a portion of the heat dissipative structure (14, 114); and
a flame-retardant wrap (18, 118) disposed about a portion of the heat resistant structure (16, 116), wherein the covering (10, 110) is disposed over the transition location (TL) with the overmold portion.

2. The fiber optic assembly of Claim 1, wherein the heat dissipative structure (14, 114), the heat resistant structure (16, 116) and the flame-retardant wrap (18, 118) form a bonded wrap for application about the transition location.

3. The fiber optic assembly of Claim 1, wherein the heat dissipative structure (14, 114), the heat resistant structure (16, 116) and the flame-retardant wrap (18, 118) are formed together in a tubular shape for application about the transition location.

4. The fiber optic assembly of Claim 1, wherein the transition location (TL) is selected from the group of a demarcation location, a tap location, and a splice location.

5. A method of forming a covering (10; 110) about a transition location (TL) of a fiber optic assembly, the transition region (TL) being a location on the fiber optic assembly where a portion of a cable jacket or other outer coating of the fiber optic assembly has been removed and/or a preconnectorized assembly is attached, the transition region (TL) including overmold portion (13) comprising the steps of:
placing a heat dissipative structure (14; 114) around a portion ot the transition location (TL), the heat dissipative structure being a metal foil; and
placing a heat resistant structure (16; 116) about a portion of the heat dissipative structure (14; 114), the heat resistant structure includes mica, wherein the covering is disposed over the transition location that includes the overmold portion; and
placing a flame-retardant wrap (18; 118) about a portion of the heat resistant structure (16; 116).

6. The method of Claim 5, wherein the heat dissipative structure, heat resistant structure, and flame-retardant wrap form a composite structure.

7. The method of Claim 5, wherein the heat dissipative structure and heat resistant structure form a composite structure.

## Patentansprüche

1. Glasfaseranordnung mit einem Übergangsort (TL - Transition Location), wobei der Übergangsort (TL) ein Ort an der Glasfaseranordnung ist, wo ein Abschnitt eines Kabelmantels oder eine andere Außenbeschichtung der Glasfaseranordnung entfernt worden ist und/oder eine vorkonfektionierte Anordnung (50) angebracht ist, mit einer Umkleidung (10, 110), wobei der Übergangsort (TL) einen Umspritzungsabschnitt (13) enthält, wobei die Umkleidung (10, 110) Folgendes umfasst:
eine wärmeableitende Struktur (14, 114), die eine um einen Abschnitt des Übergangsorts (TL) angeordnete Metallfolie ist;
eine wärmebeständige Struktur (16, 116) enthält einen um einen Abschnitt der wärmeableitenden Struktur (14, 114) angeordneten Glimmer; und
eine flammenhemmende Umhüllung (18, 118), die um einen Abschnitt der wärmebeständigen Struktur (16, 116) angeordnet ist, wobei die Umkleidung (10, 110) über dem Übergangsort (TL) mit dem Umspritzungsabschnitt angeordnet ist.

2. Glasfaseranordnung nach Anspruch 1, wobei die wärmeableitende Struktur (14, 114), die wärmebeständige Struktur (16, 116) und die flammhemmende Umhüllung (18, 118) eine gebondete Umhüllung für die Aufbringung um den Übergangsort herum bilden.

3. Glasfaseranordnung nach Anspruch 1, wobei die wärmeableitende Struktur (14, 114), die wärmebeständige Struktur (16, 116) und die flammhemmende Umhüllung (18, 118) zusammen in einer rohrförmigen Gestalt zum Aufbringen um den Übergangsort herum ausgebildet sind.

4. Glasfaseranordnung nach Anspruch 1, wobei der Übergangsort (TL) ausgewählt ist aus der Gruppe eines Demarkationsorts, eines Abgriffsorts und eines Spleißorts.

5. Verfahren zum Ausbilden einer Umkleidung (10; 110) um einen Übergangsort (TL) einer Glasfaseranordnung, wobei der Übergangsort (TL) ein Ort an der Glasfaseranordnung ist, wo ein Abschnitt eines Kabelmantels oder eine andere Außenbeschichtung der Glasfaseranordnung entfernt worden ist und/oder eine vorkonfektionierte Anordnung angebracht ist, wobei der Übergangsort (TL) einen Umspritzungsabschnitt (13) enthält, umfassend die folgenden Schritte:
Platzieren einer wärmeableitenden Struktur (14; 114) um einen Abschnitt des Übergangsorts (TL) herum, wobei die wärmeableitende Struktur eine Metallfolie ist; und
Platzieren einer wärmebeständigen Struktur (16; 116) um einen Abschnitt der wärmeableitenden Struktur (14; 114) herum, wobei die wärmebeständige Struktur Glimmer enthält, wobei die Umkleidung über dem Übergangsort angeordnet ist, der den Umspritzungsabschnitt enthält; und
Platzieren einer flammhemmenden Umhüllung (18; 118) um einen Abschnitt der wärmebeständigen Struktur (16; 116) herum.

6. Verfahren nach Anspruch 5, wobei die wärmeableitende Struktur, die wärmebeständige Struktur und die flammhemmende Umhüllung eine Verbundstruktur bilden.

7. Verfahren nach Anspruch 5, wobei die wärmeableitende Struktur und die wärmebeständige Struktur eine Verbundstruktur bilden.

## Revendications

1. Ensemble à fibres optiques comportant une région de transition (TL), la région de transition (TL) étant une région sur l'ensemble à fibres optiques où une partie d'une gaine de câble ou autre revêtement extérieur de l'ensemble à fibres optiques a été retirée et/ou un ensemble préconnectorisé (50) est attaché, pourvue d'une enveloppe (10, 110), la région de transition (TL) comportant une partie surmoulée (13), l'enveloppe (10, 110) comprenant :
une structure dissipant la chaleur (14, 114) prenant la forme d'une feuille métallique placée autour d'une partie de la région de transition (TL) ;
une structure résistant à la chaleur (16, 116) composée d'un mica placée autour d'une partie de la structure dissipant la chaleur (14, 114) ; et
un bandage ignifugeant (18, 118) placé autour d'une partie de la structure résistant à la chaleur (16, 116), l'enveloppe (10, 110) étant placée par-dessus la région de transition (TL) avec la partie surmoulée.

2. Ensemble à fibres optiques selon la revendication 1, la structure dissipant la chaleur (14, 114), la structure résistant à la chaleur (16, 116) et le bandage ignifugeant (18, 118) formant un bandage lié à appliquer autour de la région de transition.

3. Ensemble à fibres optiques selon la revendication 1, la structure dissipant la chaleur (14, 114), la structure résistant à la chaleur (16, 116) et le bandage ignifugeant (18, 118) prenant conjointement la forme d'un tube à appliquer autour de la région de transition.

4. Ensemble à fibres optiques selon la revendication 1, la région de transition (TL) étant choisie parmi le groupe constitué par une région de démarcation, une région de dérivation et une région d'épissurage.

5. Procédé de formation d'une enveloppe (10 ; 110) autour d'une région de transition (TL) d'un ensemble à fibres optiques, la région de transition (TL) étant une région sur l'ensemble à fibres optiques où une partie d'une gaine de câble ou autre revêtement extérieur de l'ensemble à fibres optiques a été retirée et/ou un ensemble préconnectorisé est attaché, la région de transition (TL) comportant une partie surmoulée (13), le procédé comprenant les étapes consistant à :
placer une structure dissipant la chaleur (14 ; 114) autour d'une partie de la région de transition (TL), la structure dissipant la chaleur prenant la forme d'une feuille métallique ; et
placer une structure résistant à la chaleur (16 ; 116) autour d'une partie de la structure dissipant la chaleur (14 ; 114), la structure résistant à la chaleur étant composée d'un mica, l'enveloppe étant placée par-dessus la région de transition qui comprend la partie surmoulée ; et
placer un bandage ignifugeant (18 ; 118) autour d'une partie de la structure résistant à la chaleur (16 ; 116).

6. Procédé selon la revendication 5, la structure dissipant la chaleur, la structure résistant à la chaleur et le bandage ignifugeant formant une structure composite.

7. Procédé selon la revendication 5, la structure dissipant la chaleur et la structure résistant à la chaleur formant une structure composite.
